# EUROPEAN PATENT SPECIFICATION

(11) **EP 2 075 807 B1**
(45) Date of publication and mention of the grant of the patent: **17.09.2014**
(21) Application number: 07380398.3
(22) Date of filing: 28.12.2007
(51) Int. Cl.: H01H 33/55, H01H 71/12

(54) **Electrical equipment for distribution network with fault detection, disconnection and elimination system**
Elektrische Vorrichtung für ein Verteilungsnetzwerk mit Fehlererkennung, Abschalt- und Entfernungssystem
Équipement électrique pour réseau de distribution avec système de détection de panne, de déconnexion et d'élimination

(43) Date of publication of application: 01.07.2009
(73) Proprietor: Constructora de Transformadores de Distribucion Cotradis, S.L.U., 28890 Loeches (ES)
(72) Inventor: Flores Losada, Luis Gonzalo, 28890 Loeches (MADRID) (ES); Sebastian Martín, Sergio, 48140 Igorre (Vizcaya) (ES); Cerro Iglesias, Cipriano, 48140 Igorre (Vizcaya) (ES)
(74) Representative: Carpintero Lopez, Francisco

(56) References cited:
- EP-A- 0 981 140
- EP-A- 1 267 368

## Description

### OBJECT OF THE INVENTION

The present invention relates to electrical equipment for electricity distribution networks, e.g. a self-protected transformer, with the special feature that said electrical equipment comprises a fault detection system, in addition to a fault disconnection system and a fault elimination system, the fault detection system and the fault disconnection system being linked electromechanically. The fault detection system comprises at least one sensor that is sensitive to variations in at least one parameter, e.g. the pressure, temperature or level of the dielectric liquid contained in the tank of the electrical equipment, and the fault elimination system comprises at least one fuse, whilst the disconnection system comprises a switch or switch disconnector, so that if there is an event indicating the detection of a variation in at least one parameter of the dielectric liquid or if a high current passes through the fuse, the fault elimination system and/or the fault disconnection system disconnects the electrical equipment.

### BACKGROUND OF THE INVENTION

Electrical equipment that forms part of electricity distribution networks, e.g. transformers and switch bays and protection cells, consists of a number of elements or switchgear that are housed in a container, which is generally made of metal, wherein there is an electrical insulating environment that completely surrounds the electrical equipment.

The two most clearly differentiated and highly developed dielectric fluid-based technologies are, on the one hand, technologies based on the use of a gas as the insulation element, and on the other hand, technologies based on the use of a dielectric liquid as an insulating environment.

Of these two technologies, that which uses liquid as an insulating environment is perhaps the oldest and it presents certain safety problems. For example, if there is an internal electric arc, said arc may cause the entire equipment to explode, which means not only the destruction of the equipment, but also a serious hazard to anyone in the proximity of the equipment, as the explosion shoots out, in addition to different pieces or elements, the liquid (e.g. oil) at a very high temperature.

One type of electrical equipment that plays a fundamental part in electricity distribution networks, and for which technology based on the use of a dielectric liquid as an insulating environment continues to be widely used is transformer equipment, which normally consists of a tank that is almost completely filled with dielectric liquid, normally mineral oil, although other liquids can be used, e.g. synthetic or natural esters, derived from plants, silicon oils or hydrocarbons with a high molecular mass, all of these with or without additives, wherein the transformer itself is located. If an insulation fault occurs between the phases of the transformer, or between one phase and earth, a fault or internal arc is produced that can lead to the decomposition of the dielectric liquid contained in the tank, consequently causing a variation in the parameters of said liquid, e.g. a significant increase in temperature and pressure, which can even cause the tank to explode. A drop in the level of the dielectric liquid to a certain value could also be considered a fault in transformers, which could be due to a leak in the tank of the transformer, and which could result in an insulation fault between phases of between one phase and earth.

As regards the way in which transformers are manufactured, they can be classified into transformers with expansion tanks and integrally filled hermetic transformers. When the temperature of the transformer rises because of the charge, the air or gas housed inside the transformer dilates and is expelled; when the transformer cools down, the air or gas contracts and air containing oxygen and moisture enters from outside. The moisture and oxygen damage the system and contaminate the dielectric liquid. To avoid this happening, nitrogen is sometimes used and a respirator removes the oxygen and moisture from the air that enters. In the case of transformers with expansion tanks, said tank mounted on the transformer cover greatly reduces the surface area of oil that is exposed to gas. As regards integrally filled hermetic transformers, they are used outdoors or indoors for the distribution of medium voltage electricity and are very useful in places where there is limited space. They are applicable in urban and industrial areas, mines, oil installations, large shopping centres and for all activities that require an intensive use of electricity. Their main characteristic is that as they do not have an oil expansion tank they require no maintenance, their construction being more compact than the traditional one. Moreover, the fundamental advantage of integrally filled hermetic transformers is that there is no contact between the dielectric liquid and the air, whereby it possible to:
Preserve the characteristics of the dielectric liquid over time,
Eliminate maintenance costs of the transformer, and
Prevent undesired spills into the environment.

Transformers tend to be protected by medium-voltage current-limiting fuses, which blow when a high current passes through them, caused by a fault between the fuse and the area protected thereby. Normally, the fuse blows in a very short time, which means that it is possible to prevent the equipment from exploding.

These fuses are usually situated outside the transformer tank, but sometimes, in more compact solutions, the fuses can be disposed inside the tank. The term "self-protected transformers" is often used to refer to this type of transformer equipment. Transformers of this type are disclosed in EP1014528 and EP0817346, for example.

There are also self-protected transformers that have a switching element, e.g. a power circuit breaker or a switch disconnector, disposed inside the tank and series-connected between the fuses and the high-voltage windings of the transformer. In this case, there is usually a fault detection system that can be linked to a tripping device, which is in turn linked to the opening mechanism of the switching element, so that if a fault is detected, the switching element disconnects the electrical equipment. Solutions of this type are defined in EP0981140, EP1267368, EP0817346 and FR2712730, for example.

However, self-protected transformers present some problems, for which different solutions have been developed to overcome each of these problems.

When the current produced by a fault is small, e.g. when the fault occurs between one phase and earth, the medium-voltage fuse can blow very slowly. In the case of the most commonly used limiting fuses, if the intensity of the fault current is lower than that corresponding to the minimum intensity of the cut-off current, the fuse partially blows, but does not cut off the current, eventually leading it to explode. Therefore, the transformer is not protected against this type of fault. To solve this problem microfuses are used, for example, which, upon blowing as a result of these fault currents of a lower intensity than that needed for the limiting fuses to open the corresponding line, activate a short circuit device that creates a very high intensity short circuit between phases and therefore blowing the current-limiting fuses. EP0800251, EP1304785, EP1102379 and WO2004102764 disclose a system of this type. They have a complex design, with many elements that reduce the system's reliability.

There is another type of solution, e.g. that defined in EP0817346, which comprises an earth leakage detector connected between the earthed tank and the core of the transformer and which consists of a striker pin fuse, the striker pin being capable of actuating an opening mechanism, which causes the switching element integrated into the electrical equipment to turn from an "on" position to an "off" position, thus leaving the electrical equipment disconnected. This solution requires the core to be isolated from earth, which complicates the design and production of the transformer.

If the fault occurs before the fuses, i.e. between the line inputs and the fuses, the fuses do not detect the fault and therefore do not work. The solution to this is electrical equipment with a device for measuring the current that flows through the phases of the transformer's primary circuit, said means being installed on the feed side of the fuses. It is thus ensured that all faults inside the tank, including faults between the line inputs and the fuses, are detected by the measuring device, causing the switching element inside the tank to open. This solution is even valid for overcoming the first problem mentioned above. These current-measuring devices may be installed outside the tank of the electrical equipment and, in order to prevent their actuation due to faults outside the tank, said devices are disposed at a measuring point as close as possible to the point where the lines enter the tank of the electrical equipment, as shown in patent EP0981140. These types of solutions, where measuring devices are disposed outside the tank, involve the disadvantage that their installation requires a location that complies with the insulation requirements, as connections outside the tank of the electrical equipment, the insulation thereof difficult to control, involve an additional risk of faults occurring. Alternatively, said devices could be installed inside the tank, but this increases the space required for the installation, making the electrical equipment more expensive.

If the fault occurs on the low-voltage side, depending on the fault that occurs, the intensity of the current that flows through the medium-voltage fuses may be too low to blow the current-limiting fuses, or it could be that the fuses are partially blown but do not cut off the current, as has been described above.

In this regard, as has been mentioned above, there are solutions that use microfuses, for example, which cause the phases to short circuit when they detect these fault currents of a lower intensity than that needed for the limiting fuses to open the corresponding line, or solutions that use a striker pin fuse as a means of detection, disposed between the earthed tank and the insulated core of the transformer, emitting an order for the switching element to open if it detects an earth leakage that is lower than that needed to blow the current-limiting fuses.

As regards faults on the low-voltage side, patent EP1267368 discloses a solution wherein there is an electromechanical relay for each phase of the secondary circuit, which controls the fault currents that flow through said phases, so that said relays and the switching element situated in the primary circuit are connected by a mechanical transmission chain, which transmits the order to open said switching element if a fault current is detected in the secondary circuit.

In the event of a low-voltage fault, such as a short circuit between phases, the current that flows through the medium-voltage fuses is enough to blow them and thus disconnect the electrical equipment.

If the value of the fault does not blow the medium-voltage fuses, or if it does so very slowly, said fault could generate gases or an increase in the temperature of the dielectric liquid, which would raise the pressure of the liquid contained inside the tank of the electrical equipment and subsequently cause an explosion.

To perfect the protection against internal faults in electrical equipment, as an alternative or together with the aforementioned means of detection (striker pin fuse, microfuses, current-measuring device, etc.), some solutions anticipate that the opening of the switching element inside the equipment and/or the blowing of the current-limiting fuses is triggered when a pre-established threshold is exceeded in at least one physical parameter of the state of the dielectric liquid, e.g. the pressure of the liquid, its temperature, the level of the liquid inside the tank, etc. Therefore, there are solutions wherein the fault detection system comprises at least one sensor that is sensitive to variations in at least one parameter of said dielectric liquid, emitting an alarm signal outside the equipment in the event of a variation in at least one parameter, or disconnecting the electric equipment by means of the elimination system, e.g. current-limiting fuses and/or switching element, if the pres-established threshold of at least one physical parameter is exceeded. In this regard, patents EP0800251, FR2629955, EP1304785, EP1102379 and WO2004102764 define electrical equipment that comprises means of detection of variations in physical parameters of the dielectric liquid, so that if the pre-established threshold is exceeded, a short-circuiting device causes a hard short circuit between phases and this immediately cuts off the current-limiting fuses. Patents FR2712730, EP1267368 and EP0981140, on the other hand, define electrical equipment wherein once the means of detection has detected that the threshold corresponding to one of the parameters has been exceeded, the electrical equipment is disconnected by means of an opening mechanism linked to the switching element.

In the examples cited in the previous paragraph, specifically wherein the fault elimination system comprises a switching element in addition to current-limiting fuses, the coupling between the detection system and said fault elimination system consists of a merely mechanical connection, i.e. there is a mechanical means actuated by the means of detection, the purpose of which is to move the switching element from the "on" position to the "off" position when it detects that the pre-established threshold of at least one physical parameter of the state of the dielectric liquid, an earth fault current, etc. has been exceeded. As regards the type of coupling between the detection system and the fault elimination system, the use of a merely mechanical coupling involves the disadvantage that a very large number of elements are needed to transmit the fault detection signal to the fault elimination system, e.g. necessary elements such as springs, bars, camshaft, cranks, etc., which reduces the operational reliability of the system and increases the risk of failure in the transmission of fault signals, which can lead to the fault elimination system not acting and an incident occurring that could destroy the equipment when a fault is detected, as well as involving a serious hazard to anyone in the proximity of the equipment.

In these cases wherein a switching element and current-limiting fuses are combined to form a fault elimination device, it is possible to limit the involvement of fuses in primary or secondary short circuits of the transformer, whilst other electrical incidents, including primary surge currents, small fault currents due to faults on the secondary side of the transformer, e.g. insulation faults between coils, faults between a phase and earth, etc., are under the responsibility of the switching element. In contrast, the presence of fuses makes it possible to choose a low-specification switching element, which is therefore more economical, having in particular a relatively low breaking capacity. In some cases, e.g. in the solution defined by patent EP0981140, the switching element consists of a power circuit breaker that makes it possible to limit the unavailability of the electrical equipment by re-closing the power circuit breaker when the cause of the fault disappears. For safety reasons, in other solutions, e.g. that disclosed in patent FR2712730, once the switching element has been opened, it is not possible to re-close its contacts without dismantling the tank.

However, in some cases the fuses, the switching element and the tripping device are connected in such a way that if at least one fuse blows, the tripping device emits an order to open the switching element. This may be due to the fact that the current intensity values exceed an intensity value threshold above which the fuses blow before an opening order emitted by the tripping device can bring about said opening. However, by means of said operation, greater safety is achieved in terms of the state of disconnection of the electrical equipment.

### DESCRIPTION OF THE INVENTION

The invention relates to electrical equipment for a distribution network. Said electrical equipment comprises a fault detection system, a fault disconnection system and a fault elimination system. The electrical equipment will be housed in a tank and insulated by an insulating environment, preferably a dielectric liquid that at least partially fills the tank. The electrical equipment comprises at least one input to the tank corresponding to at least one phase of the distribution network, a transformer with a primary winding connected to at least one phase of the distribution network and a secondary winding with at least one phase and one neutral phase. The fault detection system comprises at least one sensor that is sensitive to a fault situation. The fault elimination system comprises a fuse for each phase disposed between the input and the primary winding of the transformer. The fault disconnection system comprises a disconnection element with two positions, a first "on" position and a second "off" position. Said fault system is series-positioned between the fuse and the primary winding of the transformer. For their part, the fault elimination system and the fault disconnection system are configured so that, in a fault situation, an alarm signal is produced, which eventually disconnects the electrical equipment. Fault situation refers to any situation in which a variation occurs in the currents of all, or at least one, of the phases, whether it is due to a three-phase short circuit or due to a fault between phases, or between phase and neutral/earth inside or outside the electrical equipment, or a variation or the exceeding of a pre-established threshold in a parameter of the insulating environment, typically the temperature, pressure or level thereof.

According to the invention, the coupling between the fault detection system and the fault disconnection system is electromechanical, said electromechanical coupling comprising a series circuit provided with at least one tripping device that actuates at least one disconnection element and at least one contact of at least one relay that is linked to at least one sensor, at least one contact being configured to act in response the fault situation.

Thus, the fault detection system and the fault disconnection system are partially connected by electrical means, improving both the reliability and the actuation speed.

The internal contact may be configured to be closed when a fault situation is detected, thereby allowing a current to flow through the series circuit, at least one tripping device thus acting on at least one disconnection element and said disconnection element switching from an "on" position to an "off' position, leaving the electrical equipment disconnected from the distribution network.

The tripping device that actuates the disconnection element may comprise a striker pin of a microfuse or, alternatively, a trip coil.

The series circuit may be fed by any means, so that it is supplied with energy to operate. Possible alternatives include connecting the series circuit between one phase and the neutral phase of the transformer, between two phases, feeding it by means of coils wound around the core of the transformer or by means of an external power supply, e.g. a battery.

A module may include at least one sensor and at least one internal contact of at least one relay. Said module may comprise an output for sending a fault situation signal, it thus being possible to establish an alarm and/or open an outside device, e.g. a switch, when said fault situation signal is sent. The module may be installed in a bushing that is designed for filling the electrical equipment.

The disconnection element may comprise a switch or a switch disconnector.

The disconnection element may be an element that performs a single operation, i.e. once the disconnection element has been opened it is not possible to close its contacts without dismantling the tank, thus ensuring that once the fault that caused the disconnection element to open has been eliminated this element cannot be closed again, thereby causing a fault or an internal arc with worse consequences, e.g. causing the tank to explode.

As has been mentioned above, possible fault situations are a variation in at least one parameter of the insulating environment or a variation in the current in at least one phase.

Thus, the fault detection system may be configured to generate an event indicating the detection of a fault as a response to the sensor detecting a change in the pressure inside the tank or a change in the temperature of the dielectric liquid or a change in the level of the dielectric liquid. Likewise, the fault detection system may be configured to generate an event indicating the detection of a fault as a response to the detection of a current surge in at least one phase of the electrical equipment, using at least one means of detection to do this.

The possibility is considered that at least one fuse could be a striker pin fuse, said striker pin being configured to switch the disconnection element from an "on" position to an "off" position if said fuse blows by means of an actuation system, thus leaving the electrical equipment disconnected from the distribution network.

Likewise, the striker pin of the microfuse may be configured to act on the actuation system, i.e. the same actuation system on which the striker pin of the fuse can act.

In both cases, whether an anomaly is detected in the dielectric liquid or a fault is detected in one or all of the phases, the electrical equipment will be disconnected from the distribution network. In this regard, the generation of an alarm signal will be able to disconnect the electrical equipment.

The magnetic core of the transformer may be earthed. Likewise, the invention disclosed herein may be applied to multiphase self-protected transformers.

The fault elimination system and disconnection system disclosed herein are configured to produce an alarm signal or disconnect the electrical equipment from the distribution network in the event of a high current passing through at least one fuse or in the case of an event indicating the detection of a fault, whether as a response to the detection of a small fault current in at least one phase of the electrical equipment or due to a variation or the exceeding of a pre-established threshold in at least one physical parameter of the dielectric liquid.

### DESCRIPTION OF THE FIGURES

To complement the description and in order to help towards a better understanding of the characteristics of the invention, according to an example of a preferred practical embodiment thereof, a set of illustrative and non-limitative figures is included as an integral part of said description, which represents the following:
- Figure 1: shows a diagram of the electrical equipment with the fault detection system (6), fault disconnection system (25) and fault elimination system (8) that is the object of the invention.
- Figure 2: shows a view of the electromechanical coupling between the fault detection system (6) and the fault disconnection system (25), which shows the series circuit (11) fed between one phase (15) of the secondary and the neutral phase (16), which comprises a striker pin microfuse (13') disposed on the same actuation system (22) as the fuses (9) and at least one output contact (12, 12a, 12b, 26') of at least one relay connected to at least one sensor (7, 7a, 7b, 26).
- Figure 3: shows a possible embodiment of how the electrical series circuit (11) is fed by means of coils (24) wound around the core (21) of the transformer (14).

### PREFERRED EMBODIMENT OF THE INVENTION

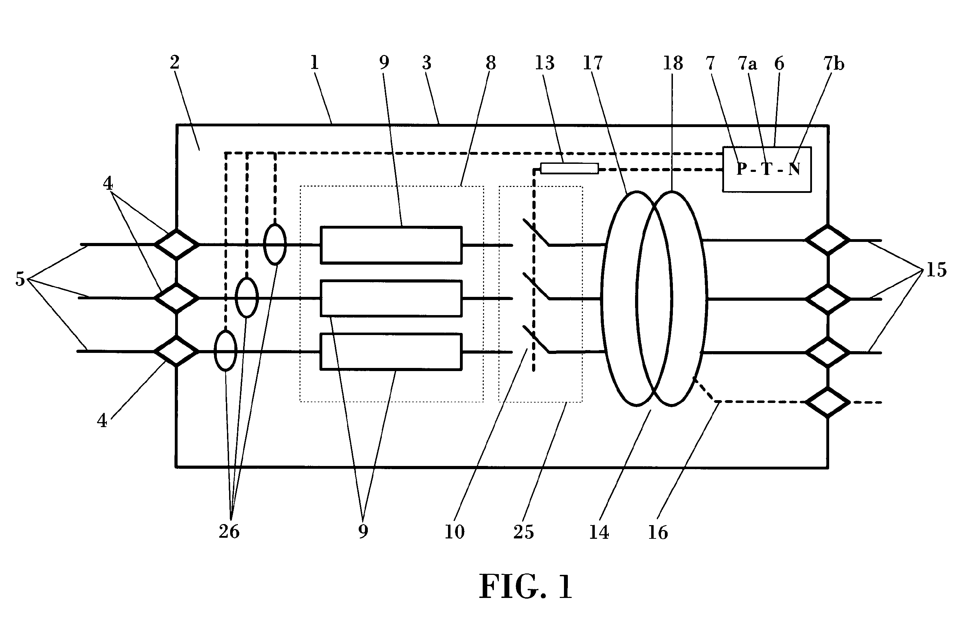

Figure 1 shows a diagram of electrical equipment (3) for electricity distribution networks, e.g. a three-phase transformer, which comprises a fault detection system (6), a fault disconnection system (25) and a fault elimination system (8), wherein the fault detection system (6), the fault disconnection system (25), the fault elimination system (8) and the transformer (14) itself are immersed in a dielectric liquid (2), e.g. oil, inside a tank (1) of the electrical equipment (3).

The primary side of the electrical equipment (3) comprises a corresponding input (4) for each phase (5) of the distribution network, each of these phases (5) comprising a fuse (9) disposed between the input (4) and the primary winding (17) of the transformer (14), said fuse (9) being designed to interrupt the phase (5) as a response to a high fault current. These fuses (9) form part of the fault elimination system (8). There is also a disconnection element (10), e.g. a switch disconnector (10) with two positions, "on" and "off", series-positioned between said fuses (9) and the primary winding (17), which can perform a single operation, i.e. switching from the "on" position to the "off" position, it being necessary to dismantle the tank to reconnect the disconnection element (10). Said disconnection element (10) forms part of the fault disconnection system (25).

The fuses (9) may consist of striker pin fuses, with the characteristic that if at least one fuse (9) blows, the corresponding striker pin is capable of turning the switch disconnector (10) from an "on" position to an "off' position, thus leaving the electrical equipment (3) disconnected from the distribution network.

As regards the fault detection system (6), it comprises at least one sensor (7, 7a, 7b) that is sensitive to variations in at least one physical parameter, e.g. the pressure, temperature or level of the dielectric liquid (2) contained in the tank (1). These sensors (7, 7a, 7b) are configured to generate an indicative event in response to a change in at least one physical parameter of the state of the liquid (2), this change being created by a fault. Furthermore, this fault detection system (6) may be configured to generate an event indicating the detection of a fault as a response to the detection of a small fault current in at least one phase (5) of the electrical equipment (3), using at least one means of detection (26) to do this, e.g. a toroidal transformer.

In short, the fault elimination system (8) and fault disconnection system (25) are configured to produce an alarm signal or disconnect the electrical equipment (3) from the distribution network in the event of a high current passing through at least one fuse (9) or in the case of an event indicating the detection of a fault, whether as a response to the detection of a current surge, e.g. a small current caused by a fault between one phase and earth, by a fault on the secondary side of the transformer, an overload, etc., in at least one phase (5) of the electrical equipment (3) or due to a variation or the exceeding of a pre-established threshold in at least one physical parameter of the dielectric liquid (2).

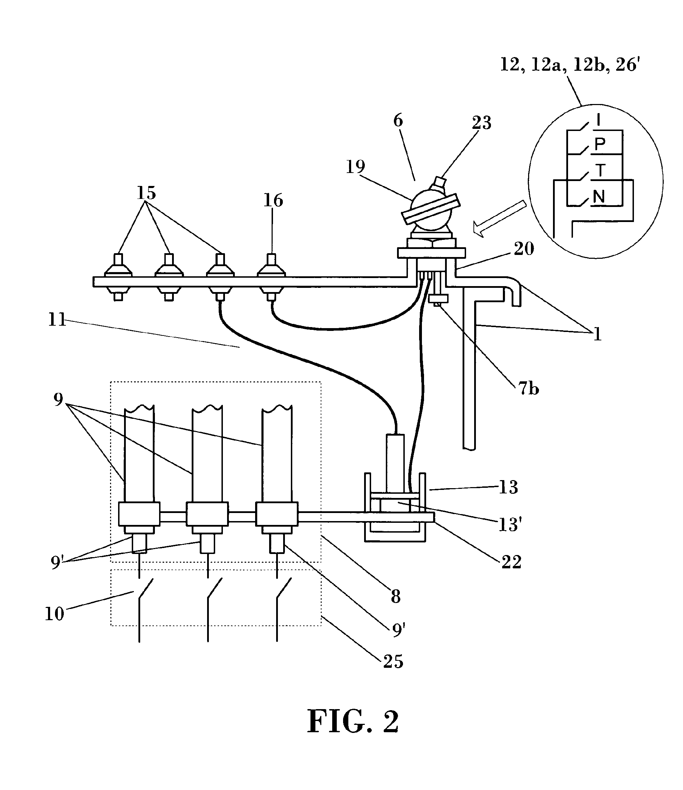

In this regard, as can be observed in figure 2, the fault detection system (6) is linked to the fault disconnection system (25) by means of an electromechanical coupling, said coupling comprising an electrical series circuit (11) provided with a tripping device (13) that actuates the disconnection system (25), e.g. a striker pin microfuse (13'), and at least one output contact (12, 12a, 12b, 26') of at least one relay linked to at least one sensor (7, 7a, 7b, 26) of the fault detection system (6). These internal contacts (12, 12a, 12b, 26') are disposed parallely therebetween, ensuring that the closure of any of these causes an alarm signal or disconnects the electrical equipment (3). Therefore, the detection of a variation in at least one physical parameter of the dielectric liquid (2) or the detection of a variation in the current in at least one phase (5) by at least one sensor (7, 7a, 7b, 26) results in the closure of at least one internal contact (12, 12a, 12b, 26'), allowing a current to flow through the circuit (11), the striker pin microfuse (13') thus acting on the switch disconnector (10) and turning said switch disconnector (10) from an "on" to an "off" position, leaving the electrical equipment (3) disconnected from the distribution network.

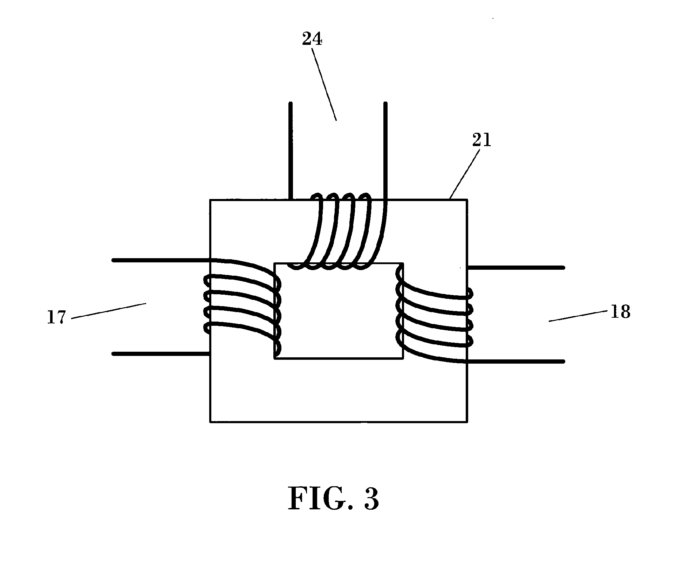

According to one embodiment of the invention, as shown in figure 2, the series circuit (11) corresponding to the electromechanical coupling between the fault detection system (6) and the fault disconnection system (25) may be fed between one phase (15) and the neutral phase (16) of the secondary side of the transformer (14). Likewise, the possibility is considered that said circuit (11) may be fed by means of coils (24) wound around the core (21) of the transformer (14), as can be observed in figure 3, or by means of an external power supply, e.g. a battery.

The fault detection system (6) comprises a compact module (19) that contains the processing of the signal from the sensors (7, 7a, 7b, 26) and the internal contacts (12, 12a, 12b, 26') of the relays linked to said sensors (7, 7a, 7b, 26). The assembly of sensors includes a pressure sensor (7), a temperature sensor (7a) and a sensor (7b) to detect the level of dielectric liquid (2), in addition to a sensor (26) to detect a current surge in at least one phase (5). Said sensors are paired with the different internal contacts, there being an internal contact (12) linked to the pressure sensor (7), an internal contact (12a) linked to the temperature sensor (7a), an internal contact (12b) linked to the level sensor (7b), and an internal contact (26') linked to the current surge sensor (26).

The module (19) is designed in such a way that it can be installed in the bushing (20) designed for filling the electrical equipment (3). Said module (19) can also comprise an output (23) that makes it possible to send a fault detection signal in response to a variation or the exceeding of the pre-established threshold in at least one physical parameter of the state of the dielectric liquid (2), or in response to the detection of a small current surge in at least one phase (5) of the electrical equipment (3), it thus being possible to establish an alarm and/or open an outside device.

As can be observed in figure 2, both the fuses (9) and the striker pin microfuse (13') act on the same actuation system (22), the switch disconnector (10) opening when the striker pin microfuse (13') is actuated or at least one fuse (9) blows. On the other hand, the configuration of the switch disconnector (10) is such that when one pole is opened, it causes the other poles to open, thus leaving all the phases (5) open and the electrical equipment (3) disconnected from the network.

## Claims

1. Electrical equipment for distribution network that comprises a fault detection system (6), a fault disconnection system (25) and a fault elimination system (8), the electrical equipment (3) being housed in a tank (1) and insulated by an insulating environment (2) that at least partially fills the tank (1), the electrical equipment (3) comprising at least one input (4) to the tank (1) corresponding to at least one phase (5) of the distribution network, a transformer (14) with a primary winding (17) connected to at least one phase (5) and a secondary winding (18) with at least one phase (15) and a neutral phase (16), the fault detection system (6) comprising at least one sensor (7, 7a, 7b, 26) that is sensitive to a fault situation, the fault elimination system (8) comprising a fuse (9) for each phase (5) disposed between the input (4) and the primary winding (17) of the transformer (14), and the fault disconnection system (25) comprising a disconnection element (10) with two positions, a first "on" position and a second "off" position, the fault disconnection system (25) disposed in series between said fuse (9) and the primary winding (17) of the transformer (14), the fault elimination system (8) and the fault disconnection system (25) being configured to produce an alarm signal and/or disconnect the electrical equipment (3) in a fault situation,
**characterised in that**
the coupling between the fault detection system (6) and the fault disconnection system (25) is electromechanical, said electromechanical coupling comprising a series circuit (11) comprising at least one tripping device (13) and at least one contact (12, 12a, 12b, 26') arranged in series with said at least one tripping device (13), said at least one tripping device (13) being arranged to actuate at least one disconnection element (10) and said at least one contact (12, 12a, 12b, 26') being an output contact of at least one relay linked to said at least one sensor (7, 7a, 7b, 26), whereby said at least one contact (12, 12a, 12b, 26') is configured to act in response to the fault situation.

2. Electrical equipment for distribution network with fault detection, disconnection and elimination system according to claim 1, **characterised in that** the contact (12, 12a, 12b, 26') is configured to be closed when a fault situation is detected, allowing a current to flow through the series circuit (11), at least one tripping device (13) thus acting on at least one disconnection element (10) and said disconnection element (10) switching from an "on" position to an "off' position, leaving the electrical equipment (3) disconnected from the distribution network.

3. Electrical equipment for distribution network with fault detection, disconnection and elimination system according to claim 2, **characterised in that** the tripping device (13) that actuates the disconnection element (10) comprises a striker pin (13') of a microfuse.

4. Electrical equipment for distribution network with fault detection, disconnection and elimination system according to claim 2, **characterised in that** the tripping device (13) that actuates the disconnection element (10) comprises a trip coil.

5. Electrical equipment for distribution network with fault detection, disconnection and elimination system according to claim 2, **characterised in that** the series circuit (11) is fed between one phase (15) and the neutral phase (16) of the transformer (14).

6. Electrical equipment for distribution network with fault detection, disconnection and elimination system according to claim 2, **characterised in that** the series circuit (11) is fed by means of coils (24) wound round the core (21) of the transformer (14).

7. Electrical equipment for distribution network with fault detection, disconnection and elimination system according to claim 2, **characterised in that** the series circuit (11) is fed by an external power supply.

8. Electrical equipment for distribution network with fault detection, disconnection and elimination system according to any of claims 2-7, **characterised in that** at least one sensor (7, 7a, 7b, 26) and at least one contact (12, 12a, 12b, 26') are integrated into a module (19).

9. Electrical equipment for distribution network with fault detection, disconnection and elimination system according to claim 8, **characterised in that** the module (19) comprises an output (23) for sending a fault situation signal, it thus being possible to establish an alarm and/or open an outside device on sending said fault situation signal.

10. Electrical equipment for distribution network with fault detection, disconnection and elimination system according to claim 9, **characterised in that** the module (19) is installed in a bushing (20) designed for filling the electrical equipment (3).

11. Electrical equipment for distribution network with fault detection, disconnection and elimination system according to claim 2, **characterised in that** the disconnection element (10) comprises a switch.

12. Electrical equipment for distribution network with fault detection, disconnection and elimination system according to claim 2, **characterised in that** the disconnection element (10) comprises a switch disconnector.

13. Electrical equipment for distribution network with fault detection, disconnection and elimination system according to claims 11 or 12, **characterised in that** the disconnection element (10) is performs a single operation element.

14. Electrical equipment for distribution network with fault detection, disconnection and elimination system according to any of the previous claims, **characterised in that** the fault situation corresponds to a variation or the exceeding of at least one parameter of the insulating environment (2) or to a variation in current in at least one phase (5).

15. Electrical equipment for distribution network with fault detection, disconnection and elimination system according to any of the previous claims, **characterised in that** the insulating environment (2) is a dielectric liquid (2).

16. Electrical equipment for distribution network with fault detection, disconnection and elimination system according to any of the previous claims, **characterised in that** the fault detection system (6) is configured to generate an event indicating the detection of a fault as a response to the detection by the sensor (7) of a change in pressure inside the tank (1).

17. Electrical equipment for distribution network with fault detection, disconnection and elimination system according to any of claims 1-15, **characterised in that** the fault detection system (6) is configured to generate an event indicating the detection of a fault as a response to the detection by the sensor (7a) of a change in temperature of the dielectric liquid (2).

18. Electrical equipment for distribution network with fault detection, disconnection and elimination system according to any of claims 1-15, **characterised in that** the fault detection system (6) is configured to generate an event indicating the detection of a fault as a response to the detection by the sensor (7b) of a change in the level of the dielectric liquid (2).

19. Electrical equipment for distribution network with fault detection, disconnection and elimination system according to any of claims 1-15, **characterised in that** the fault detection system (6) is configured to generate an event indicating the detection of a fault as a response to the detection of a current surge in at least one phase (5) of the electrical equipment (3), using at least one means of detection (26).

20. Electrical equipment for distribution network with fault detection, disconnection and elimination system according to any of claims 1-19, **characterised in that** the fault detection system (6) is configured to generate an event indicating the detection of a fault as a response to the detection of a change in pressure inside the tank (1), to the detection of a change in temperature of the dielectric liquid (2), to the detection of a change in the level of the dielectric liquid (2) or to the detection of a surge current in at least one phase (5) of the electrical equipment (3).

21. Electrical equipment for distribution network with fault detection, disconnection and elimination system according to claim 1, **characterised in that** at least one fuse (9) is a striker pin fuse (9'), said striker pin (9') being configured to switch the disconnection element (10) from an "on" position to an "off" position if said fuse (9) blows by means of an actuation system (22), thus leaving the electrical equipment (3) disconnected from the distribution network.

22. Electrical equipment for distribution network with fault detection, disconnection and elimination system according to claims 3 and 21, **characterised in that** the striker pin microfuse (13') is configured to act on the actuation system (22).

23. Electrical equipment for distribution network with fault detection, disconnection and elimination system according to any of the previous claims, **characterised in that** the magnetic core (21) of the transformer (14) is earthed.

24. Electrical equipment for distribution network with fault detection, disconnection and elimination system according to claim 23, **characterised in that** the transformer (14) is a multiphase self-protected transformer.

## Patentansprüche

1. Elektrische Vorrichtung für ein Verteilungsnetzwerk, welche ein Fehlererkennungssystem (6), ein Fehlerabschaltsystem (25) und ein Fehlerbeseitigungssystem (8) umfasst, wobei die elektrische Vorrichtung (3) in einem Behälter (1) angeordnet ist und durch ein isolierendes Milieu, welches zumindest teilweise den Behälter (1) füllt, isoliert ist, wobei die elektrische Vorrichtung (3) entsprechend mindestens einer Phase (5) des Verteilungsnetzwerkes mindestens einen Eingang (4) zum Behälter (1), einen Transformator (14) mit einer Primärwicklung (17), welche mit mindestens einer Phase (5) verbunden ist, und mit einer Sekundärwicklung (18) mit mindestens einer Phase (15) und einem Neutralleiter (16) umfasst, wobei das Fehlererkennungssystem (6) mindestens einen gegenüber einem Fehlerzustand empfindlichen Sensor (7, 7a, 7b, 26) umfasst, wobei das Fehlerbeseitigungssystem (8) eine Sicherung (9) für jede Phase (5) umfasst, wobei die Sicherung (9) zwischen dem Eingang (4) und der Primärwicklung (17) des Transformators (14) angeordnet ist, und wobei das Fehlerabschaltsystem (25) ein Trennelement (10) mit zwei Zuständen, einem ersten "Ein"-Zustand und einem zweiten "Aus"-Zustand umfasst, wobei das Fehlerabschaltsystem (25) zwischen der Sicherung (9) und der Primärwicklung (17) des Transformators (14) in Serie angeordnet ist, wobei das Fehlerbeseitigungssystem (8) und das Fehlerabschaltsystem (25) derart ausgebildet sind, dass das Fehlerbeseitigungssystem (8) und das Fehlerabschaltsystem (25) in einem Fehlerzustand ein Warnsignal erzeugen und/oder die elektrische Vorrichtung (3) trennen, **dadurch gekennzeichnet, dass** die Verbindung zwischen dem Fehlererkennungssystem (6) und dem Fehlerabschaltsystem (25) elektromechanisch ist, wobei die elektromechanische Verbindung eine Serienschaltung (11), welche mindestens eine Auslöseeinrichtung (13) und mindestens einen mit der mindestens einen Auslöseeinrichtung (13) in Serie geschalteten Anschluss (12, 12a, 12b, 26') umfasst, wobei die Auslöseeinrichtung (13) zum Betätigen des mindestens einen Trennelements (10) angeordnet ist, und wobei der mindestens eine Anschluss (12, 12a, 12b, 26') ein Ausgangsanschluss des mindestens einen Relais ist, wobei das Relais mit dem mindestens einen Sensor (7, 7a, 7b, 26) angeschlossen ist, wobei der mindestens eine Anschluss (12, 12a, 12b, 26') derart ausgebildet ist, dass der mindestens eine Anschluss (12, 12a, 12b, 26') auf den Fehlerzustand reagiert.

2. Elektrische Vorrichtung für ein Verteilungsnetzwerk mit einem Fehlererkennungssystem, einem Fehlerabschaltsystem und einem Fehlerbeseitigungssystem nach Anspruch 1, **dadurch gekennzeichnet, dass** der Anschluss (12, 12a, 12b, 26') derart ausgebildet ist, dass der Anschluss (12, 12a, 12b, 26') geschlossen wird, wenn ein Fehlerzustand erkannt wird, wobei ein Strom durch die Reihenschaltung (11) fließt, wobei mindestens eine Auslöseeinrichtung (13) somit auf mindestens ein Trennelement (10) wirkt und das Trennelement (10) von einem "Ein"-Zustand in einen "Aus"-Zustand geschaltet wird, und wobei die elektrische Vorrichtung (3) von dem Verteilungsnetzwerk getrennt bleibt.

3. Elektrische Vorrichtung für ein Verteilungsnetzwerk mit einem Fehlererkennungssystem, einem Fehlerabschaltsystem und einem Fehlerbeseitigungssystem nach Anspruch 2, **dadurch gekennzeichnet, dass** die Auslöseeinrichtung (13), welche das Trennelement (10) betätigt, einen Anschlagstift (13') einer Mikrosicherung umfasst.

4. Elektrische Vorrichtung für ein Verteilungsnetzwerk mit einem Fehlererkennungssystem, einem Fehlerabschaltsystem und einem Fehlerbeseitigungssystem nach Anspruch 2, **dadurch gekennzeichnet, dass** die Auslöseeinrichtung (13) das Trennelement (10) betätigt, wobei das Trennelement (10) eine Auslösespule umfasst.

5. Elektrische Vorrichtung für ein Verteilungsnetzwerk mit einem Fehlererkennungssystem, einem Fehlerabschaltsystem und einem Fehlerbeseitigungssystem nach Anspruch 2, **dadurch gekennzeichnet, dass** die Serienschaltung (11) mit einer Phase (15) und dem Neutralleiter (16) des Transformators (14) gespeist wird.

6. Elektrische Vorrichtung für ein Verteilungsnetzwerk mit einem Fehlererkennungssystem, einem Fehlerabschaltsystem und einem Fehlerbeseitigungssystem nach Anspruch 2, **dadurch gekennzeichnet, dass** die Serienschaltung (11) durch Spulen (24) gespeist wird, wobei die Spulen (24) um den Kern (21) des Transformators (14) gewickelt sind.

7. Elektrische Vorrichtung für ein Verteilungsnetzwerk mit einem Fehlererkennungssystem, einem Fehlerabschaltsystem und einem Fehlerbeseitigungssystem nach Anspruch 2, **dadurch gekennzeichnet, dass** die Serienschaltung (11) durch eine externe Energieversorgung gespeist wird.

8. Elektrische Vorrichtung für ein Verteilungsnetzwerk mit einem Fehlererkennungssystem, einem Fehlerabschaltsystem und einem Fehlerbeseitigungssystem nach einem der Ansprüche 2 bis 7, **dadurch gekennzeichnet, dass** mindestens ein Sensor (7, 7a, 7b, 26) und mindestens ein Anschluss (12, 12a, 12b, 26') in einem Modul (19) integriert sind.

9. Elektrische Vorrichtung für ein Verteilungsnetzwerk mit einem Fehlererkennungssystem, einem Fehlerabschaltsystem und einem Fehlerbeseitigungssystem nach Anspruch 8, **dadurch gekennzeichnet, dass** das Modul (19) einen Ausgang (23) zum Senden eines Fehlerzustandssignals umfasst, so dass es möglich ist, dass ein Alarm und/oder eine externe Einrichtung zum Senden des Fehlerzustandssignals ausgelöst wird.

10. Elektrische Vorrichtung für ein Verteilungsnetzwerk mit einem Fehlererkennungssystem, einem Fehlerabschaltsystem und einem Fehlerbeseitigungssystem nach Anspruch 9, **dadurch gekennzeichnet, dass** das Modul (19) in eine Buchse (20), welche zum Befüllen der elektrischen Vorrichtung (3) ausgebildet ist, eingebaut ist.

11. Elektrische Vorrichtung für ein Verteilungsnetzwerk mit einem Fehlererkennungssystem, einem Fehlerabschaltsystem und einem Fehlerbeseitigungssystem nach Anspruch 2, **dadurch gekennzeichnet, dass** das Trennelement (10) einen Schalter umfasst.

12. Elektrische Vorrichtung für ein Verteilungsnetzwerk mit einem Fehlererkennungssystem, einem Fehlerabschaltsystem und einem Fehlerbeseitigungssystem nach Anspruch 2, **dadurch gekennzeichnet, dass** das Trennelement (10) einen Lasttrennschalter umfasst.

13. Elektrische Vorrichtung nach Anspruch 11 oder 12, **dadurch gekennzeichnet, dass** das Trennelement (10) ein Einzelarbeitselement ist.

14. Elektrische Vorrichtung für ein Verteilungsnetzwerk mit einem Fehlererkennungssystem, einem Fehlerabschaltsystem und einem Fehlerbeseitigungssystem nach einem der vorangehenden Ansprüche, **dadurch gekennzeichnet, dass** der Fehlerzustand einer Schwankung oder der Überschreitung des mindestens einen Parameters des isolierenden Milieus (2) oder einer Stromschwankung in mindestens einer Phase (5) entspricht.

15. Elektrische Vorrichtung für ein Verteilungsnetzwerk mit einem Fehlererkennungssystem, einem Fehlerabschaltsystem und einem Fehlerbeseitigungssystem nach einem der vorangehenden Ansprüche, **dadurch gekennzeichnet, dass** das isolierende Milieu (2) ein Dielektrikum (2) ist.

16. Elektrische Vorrichtung für ein Verteilungsnetzwerk mit einem Fehlererkennungssystem, einem Fehlerabschaltsystem und einem Fehlerbeseitigungssystem nach einem der vorangehenden Ansprüche, **dadurch gekennzeichnet, dass** das Fehlererkennungssystem (6) zum Erzeugen eines Ereignisses ausgebildet ist, wobei das Ereignis das Erkennen eines Fehlers als eine Antwort auf das Erkennen einer Druckänderung im Behälter (1) durch den Sensor (7) anzeigt.

17. Elektrische Vorrichtung für ein Verteilungsnetzwerk mit einem Fehlererkennungssystem, einem Fehlerabschaltsystem und einem Fehlerbeseitigungssystem nach einem der Ansprüche 1 bis 15, **dadurch gekennzeichnet, dass** das Fehlererkennungssystem (6) zum Erzeugen eines Ereignisses ausgebildet ist, welches das Erkennen eines Fehlers als eine Antwort auf das Erkennen einer Temperaturänderung des Dielektrikums (2) durch den Sensor (7a) anzeigt.

18. Elektrische Vorrichtung für ein Verteilungsnetzwerk mit einem Fehlererkennungssystem, einem Fehlerabschaltsystem und einem Fehlerbeseitigungssystem nach einem der Ansprüche 1 bis 15, **dadurch gekennzeichnet, dass** das Fehlererkennungssystem (6) zum Erzeugen eines Ereignisses ausgebildet ist, welches das Erkennen eines Fehlers als eine Antwort auf das Erkennen einer Füllstandsänderung des Dielektrikums (2) durch den Sensor (7b) anzeigt.

19. Elektrische Vorrichtung für ein Verteilungsnetzwerk mit einem Fehlererkennungssystem, einem Fehlerabschaltsystem und einem Fehlerbeseitigungssystem nach einem der Ansprüche 1 bis 15, **dadurch gekennzeichnet, dass** das Fehlererkennungssystem (6) zum Erzeugen eines Ereignisses ausgebildet ist, welches das Erkennen eines Fehlers als eine Antwort auf das Erkennen eines Überstromes in mindestens einer Phase (5) der elektrischen Vorrichtung (3) anzeigt, wobei mindestens ein Erkennungsmittel (26) verwendet wird.

20. Elektrische Vorrichtung für ein Verteilungsnetzwerk mit einem Fehlererkennungssystem, einem Fehlerabschaltsystem und einem Fehlerbeseitigungssystem nach einem der Ansprüche 1 bis 19, **dadurch gekennzeichnet, dass** das Fehlererkennungssystem (6) zum Erzeugen eines Ereignisses ausgebildet ist, welches das Erkennen eines Fehlers als eine Antwort auf das Erkennen einer Druckänderung im Behälter (1), einer Temperaturänderung des Dielektrikums (2), einer Füllstandsänderung des Dielektrikums (2) oder eines Überstromes in mindestens einer Phase (5) der elektrischen Vorrichtung (3) anzeigt.

21. Elektrische Vorrichtung für ein Verteilungsnetzwerk mit einem Fehlererkennungssystem, einem Fehlerabschaltsystem und einem Fehlerbeseitigungssystem nach Anspruch 1, **dadurch gekennzeichnet, dass** mindestens eine Sicherung (9) eine Schlagstift-Sicherung (9') ist, wobei die Schlagstift-Sicherung (9') zum Schalten des Trennelements (10) von einem "Ein"-Zustand in einen "Aus"-Zustand ausgebildet ist, wenn die Sicherung (9) mittels eines Auslösesystems (22) ausgelöst wird, wobei somit die elektrische Vorrichtung (3) von dem Verteilungsnetzwerk getrennt bleibt.

22. Elektrische Vorrichtung für ein Verteilungsnetzwerk mit einem Fehlererkennungssystem, einem Fehlerabschaltsystem und einem Fehlerbeseitigungssystem nach Ansprüche 3 und 21, **dadurch gekennzeichnet, dass** die Anschlagstift-Mikrosicherung (13') zum Einwirken auf das Auslösesystem (22) ausgebildet ist.

23. Elektrische Vorrichtung für ein Verteilungsnetzwerk mit einem Fehlererkennungssystem, einem Fehlerabschaltsystem und einem Fehlerbeseitigungssystem nach einem der vorangehenden Ansprüche, **dadurch gekennzeichnet, dass** der Magnetkern (21) des Transformators (14) geerdet ist.

24. Elektrische Vorrichtung für ein Verteilungsnetzwerk mit einem Fehlererkennungssystem, einem Fehlerabschaltsystem und einem Fehlerbeseitigungssystem nach Anspruch 23, **dadurch gekennzeichnet, dass** der Transformator (14) ein mehrphasiger, selbstschützender Transformator ist.

## Revendications

1. Equipement électrique pour réseau de distribution, qui comprend un système de détection d'erreur (6), un système de déconnexion d'erreur (25) et un système d'élimination d'erreur (8), l'équipement électrique étant logé dans un réservoir (1) et isolé par un environnement isolant (2) qui remplit au moins en partie le réservoir (1), l'équipement électrique (3) comprenant au moins une entrée (4) vers le réservoir (1) correspondant à au moins une phase (5) du réseau de distribution, un transformateur (14) avec un enroulement primaire (17) relié à au moins une phase (5), et un enroulement secondaire (18) avec au moins une phase (15) et une phase neutre (16), le système de détection d'erreur (6) comprenant au moins un capteur (7, 7a, 7b, 26) qui est sensible à une situation d'erreur, le système d'élimination d'erreur (8) comprenant un fusible (9) pour chaque phase (5), disposé entre l'entrée (4) et l'enroulement primaire (17) du transformateur (14), et le système de déconnexion d'erreur (25) comprenant un élément de déconnexion (10) avec deux positions, une première position "marche" et une seconde position "arrêt", le système de déconnexion d'erreur (25) étant disposé en série entre le fusible (9) et l'enroulement primaire (17) du transformateur (14), le système d'élimination d'erreur (8) et le système de déconnexion d'erreur (25) étant conçus pour produire un signal d'alarme et/ou déconnecter l'équipement électrique (3) dans une situation d'erreur,
**caractérisé en ce que** le couplage entre le système de détection d'erreur (6) et le système de déconnexion d'erreur (25) est électromécanique, ledit couplage électromécanique comprenant un circuit série (11) comprenant au moins un dispositif de déclenchement (13) et au moins un contact (12, 12a, 12b, 26') disposé en série avec le dispositif de déclenchement (13), ledit dispositif de déclenchement (13) étant conçu pour actionner au moins un élément de déconnexion (10), et ledit contact (12, 12a, 12b, 26') étant un contact de sortie d'au moins un relais relié audit capteur (7, 7a, 7b, 26), moyennant quoi ledit contact (12, 12a, 12b, 26') est conçu pour agir en réponse à la situation d'erreur.

2. Equipement électrique pour réseau de distribution avec un système de détection, de déconnexion et d'élimination d'erreur selon la revendication 1, **caractérisé en ce que** le contact (12, 12a, 12b, 26') est conçu pour être fermé quand une situation d'erreur est détectée, permettant le passage d'un courant dans le circuit série (11), au moins un dispositif de déclenchement (13) agissant ainsi sur au moins un élément de déconnexion (10), lequel dispositif de déconnexion (10) passe alors d'une position "marche" à une position "arrêt", laissant l'équipement électrique (3) déconnecté du réseau de distribution.

3. Equipement électrique pour réseau de distribution avec un système de détection, de déconnexion et d'élimination d'erreur selon la revendication 2, **caractérisé en ce que** le dispositif de déclenchement (13) qui actionne l'élément de déconnexion (10) comprend une tige de percuteur (13') d'un microfusible.

4. Equipement électrique pour réseau de distribution avec un système de détection, de déconnexion et d'élimination d'erreur selon la revendication 2, **caractérisé en ce que** le dispositif de déclenchement (13) qui actionne l'élément de déconnexion (10) comprend une bobine de déclenchement.

5. Equipement électrique pour réseau de distribution avec un système de détection, de déconnexion et d'élimination d'erreur selon la revendication 2, **caractérisé en ce que** le circuit série (11) est alimenté entre une phase (15) et la phase neutre (16) du transformateur (14).

6. Equipement électrique pour réseau de distribution avec un système de détection, de déconnexion et d'élimination d'erreur selon la revendication 2, **caractérisé en ce que** le circuit série (11) est alimenté à l'aide de bobines (24) enroulées autour du noyau (21) du transformateur (14).

7. Equipement électrique pour réseau de distribution avec un système de détection, de déconnexion et d'élimination d'erreur selon la revendication 2, **caractérisé en ce que** le circuit série (11) est alimenté par une alimentation électrique externe.

8. Equipement électrique pour réseau de distribution avec un système de détection, de déconnexion et d'élimination d'erreur selon l'une quelconque des revendications 2 à 7, **caractérisé en ce qu'**au moins un capteur (7, 7a, 7b, 26) et au moins un contact (12, 12a, 12b, 26') sont intégrés dans un module (19).

9. Equipement électrique pour réseau de distribution avec un système de détection, de déconnexion et d'élimination d'erreur selon la revendication 8, **caractérisé en ce que** le module (19) comprend une sortie (23) pour envoyer un signal de situation d'erreur, moyennant quoi il est possible de créer une alerte et/ou d'ouvrir un dispositif extérieur lors de l' envoi du signal de situation d'erreur.

10. Equipement électrique pour réseau de distribution avec un système de détection, de déconnexion et d'élimination d'erreur selon la revendication 9, **caractérisé en ce que** le module (19) est installé dans une douille (20) destinée à remplir l'équipement électrique (3).

11. Equipement électrique pour réseau de distribution avec un système de détection, de déconnexion et d'élimination d'erreur selon la revendication 2, **caractérisé en ce que** l'élément de déconnexion (10) comprend un interrupteur.

12. Equipement électrique pour réseau de distribution avec un système de détection, de déconnexion et d'élimination d'erreur selon la revendication 2, **caractérisé en ce que** l'élément de déconnexion (10) comprend un interrupteur-sectionneur.

13. Equipement électrique pour réseau de distribution avec un système de détection, de déconnexion et d'élimination d'erreur selon les revendications 11 ou 12, **caractérisé en ce que** l'élément de déconnexion (10) est un élément à fonctionnement unique.

14. Equipement électrique pour réseau de distribution avec un système de détection, de déconnexion et d'élimination d'erreur selon l'une quelconque des revendications précédentes, **caractérisé en ce que** la situation d'erreur correspond à une variation ou à une valeur excessive d'au moins un paramètre de l'environnement isolant (2), ou à une variation de courant dans au moins une phase (5).

15. Equipement électrique pour réseau de distribution avec un système de détection, de déconnexion et d'élimination d'erreur selon l'une quelconque des revendications précédentes, **caractérisé en ce que** l'environnement isolant (2) est un liquide diélectrique (2) .

16. Equipement électrique pour réseau de distribution avec un système de détection, de déconnexion et d'élimination d'erreur selon l'une quelconque des revendications précédentes, **caractérisé en ce que** le système de détection d'erreur (6) est conçu pour générer un événement indiquant la détection d'un défaut comme réponse à la détection, par le capteur (7), d'un changement de pression à l'intérieur du réservoir (1).

17. Equipement électrique pour réseau de distribution avec un système de détection, de déconnexion et d'élimination d'erreur selon l'une quelconque des revendications 1 à 15, **caractérisé en ce que** le système de détection d'erreur (6) est conçu pour générer un événement indiquant la détection d'une erreur en réponse à la détection, par le capteur (7a), d'un changement de température du liquide diélectrique (2).

18. Equipement électrique pour réseau de distribution avec un système de détection, de déconnexion et d'élimination d'erreur selon l'une quelconque des revendications 1 à 15, **caractérisé en ce que** le système de détection d'erreur (6) est conçu pour générer un événement indiquant la détection d'une erreur en réponse à la détection, par le capteur (7b), d'un changement de niveau du liquide diélectrique (2).

19. Equipement électrique pour réseau de distribution avec un système de détection, de déconnexion et d'élimination d'erreur selon l'une quelconque des revendications 1 à 15, **caractérisé en ce que** le système de détection d'erreur (6) est conçu pour générer un événement indiquant la détection d'une erreur en réponse à la détection d'une pointe de courant dans au moins une phase (5) de l'équipement électrique (3), à l'aide d'au moins un moyen de détection (26).

20. Equipement électrique pour réseau de distribution avec un système de détection, de déconnexion et d'élimination d'erreur selon l'une quelconque des revendications 1 à 19, **caractérisé en ce que** le système de détection d'erreur (6) est conçu pour générer un événement indiquant la détection d'une erreur en réponse à la détection d'un changement de pression à l'intérieur du réservoir (1), à la détection d'un changement de température du liquide diélectrique (2), à la détection d'un changement de niveau du liquide diélectrique (2) ou à la détection d'une pointe de courant dans au moins une phase (5) de l'équipement (3).

21. Equipement électrique pour réseau de distribution avec un système de détection, de déconnexion et d'élimination d'erreur selon la revendication 1, **caractérisé en ce qu'**au moins un fusible (9) est un fusible à percuteur (9'), ledit percuteur (9') étant conçu pour faire passer l'élément de déconnexion (10) d'une position "marche" à une position "arrêt" si le fusible (9) saute à l'aide d'un système d'actionnement, laissant ainsi l'équipement électrique (3) déconnecté du réseau de distribution.

22. Equipement électrique pour réseau de distribution avec un système de détection, de déconnexion et d'élimination d'erreur selon les revendications 3 et 21, **caractérisé en ce que** le microfusible à percuteur (13') est conçu pour agir sur le système d'actionnement (22).

23. Equipement électrique pour réseau de distribution avec un système de détection, de déconnexion et d'élimination d'erreur selon l'une quelconque des revendications précédentes, **caractérisé en ce que** le noyau magnétique (21) du transformateur (14) est mis à la terre.

24. Equipement électrique pour réseau de distribution avec un système de détection, de déconnexion et d'élimination d'erreur selon la revendication 23, **caractérisé en ce que** le transformateur (14) est un transformateur multiphasé à autoprotection.
